# FASCICULE DE BREVET EUROPEEN

(11) **EP 0 846 133 B1**
(45) Date de publication et mention de la délivrance du brevet: **30.06.1999**
(21) Numéro de dépôt: 96929361.2
(22) Date de dépôt: 22.08.1996
(51) Int. Cl.: C08F 220/04, C08F 220/54

(54) **POLYMERES (METH)ACRYLIQUES, LEUR PROCEDE DE FABRICATION ET LEUR UTILISATION COMME DISPERSANT DE PIGMENT**
(METH)ACRYLAT POLYMERE VERFAHREN ZU DEREN HERSTELLUNG UND DEREN VERWENDUNG ALS PIGMENTDISPERGIERMITTEL
(METH)ACRYLIC POLYMERS, METHOD FOR MAKING SAME AND USE THEREOF AS PIGMENT DISPERSANT

(30) Priorité: 24.08.1995 FR 9510042
(43) Date de publication de la demande: 10.06.1998
(73) Titulaire: CRAY VALLEY SA, 92800 Puteaux (FR)
(72) Inventeur: GILLET, Jean-Philippe, 76700 Gainneville (FR); ILIOPOULOS, Ilias, F-75012 Paris (FR); LAFUMA, Françoise, F-92330 Sceaux (FR); PEZRON, Erwoan, Prairie Village, KS 66208 (US)
(74) Mandataire: Chaillot, Geneviève
(86) Numéro de dépôt international: FR9601309
(87) Numéro de publication internationale: WO9708217

(56) Documents cités:
- EP-A- 0 107 403
- EP-A- 0 494 022
- FR-A- 2 693 202

## Description

On connaît déjà par J. Applied Polymer Science, vol. 44, pp. 869-876 (1992) des copolymères comprenant de 68 % à 95 % en moles d'acrylate de sodium et de 32 % à 5 % en moles d'acrylate de lauryle, utiles pour la dispersion de particules polaires et non-polaires telles que le dioxyde de titane et le noir de carbone. On connaît également par J. Dispersion Science and Technology, 13(2), pp. 195-200 (1992) la dispersion de particules de graphite au moyen d'un copolymère, de poids moléculaire moyen 20.000, d'anhydride maléique et d'α-oléfine ayant une structure dite "peigne" avec des chaînes latérales à la fois hydrophiles et hydrophobes.

Le brevet EP-B-107.403 décrit une dispersion aqueuse stable comprenant une émulsion de copolymère, insoluble dans l'eau, obtenue à partir de 10 à 70 % en poids d'acide (méth)acrylique, de 0,5 à 25 % en poids de N-dodécylacrylamide et de préférence au moins 30 % en poids de (méth)acrylate d'alkyle C₁-C₄. Après neutralisation par un hydroxyde alcalin ou une amine volatile, ce copolymère en émulsion devient fortement visqueux et capable d'épaissir des milieux aqueux divers, tels que peintures aqueuses, dispersions pigmentaires, etc.

Le brevet US-A-4.524.175 décrit une émulsion eau-dans-huile stable comprenant une phase aqueuse discontinue contenant un copolymére hydrophobe associatif obtenu à partir de 40 à 99,9 % en moles d'acrylamide, de 0 à 50 % en moles d'acide acrylique et de 0,1 à 10 % en moles de (méth)acrylate d'alkyle C₈-C₁₂, ledit copolymère ayant un poids moléculaire de 800.000 à 2.500.000.

Le brevet US-A-4.432.881 décrit l'emploi, dans un agent épaississant hydrosoluble, d'un copolymère d'acide (méth)acrylique et d'un monomère insoluble dans l'eau possèdant un groupe hydrophobe d'au moins 8 atomes de carbone tel qu'un N-alkylamide éthyléniquement insaturé. Dans cet agent épaississant, ce copolymère est associé à un surfactant non-ionique hydrodispersible dans un rapport en poids du copolymère au surfactant compris entre 0,5 et 20.

Le brevet FR-A-2.693.202 décrit, à titre d'agents épaississants de solutions aqueuses salines, des copolymères amphiphiles hydrosolubles d'acrylate de sodium ou de potassium et d'N-monoalkylacrylamide (le groupe alkyle étant en C₈-C₁₆), le nombre total de motifs monomères étant compris entre 500 et 20 000 et les motifs N-monoalkylacrylamide présents à raison de 0,5 à 20 % en moles étant répartis de manière non statistique le long des chaînes, c'est-à-dire plutôt du type bloc.

La demande de brevet européen EP-A-0 494 022 décrit un copolymère provenant de la copolymérisation d'un mélange de monomères comprenant au moins 30% en poids d'au moins un acide organique carboxylique à insaturation éthylénique ; au moins 30 % en poids d'au moins un N-alkyl acrylamide dont le groupement alkyle contient de 8 à 30 atomes de carbone dans la chaîne alkyle ; et de 0 à 40% d'au moins un monomère insaturé hydrophile, ainsi qu'un copolymère correspondant dont les groupements carboxyliques sont totalement ou partiellement salifiés.

Bien que la plupart de ces documents aient perçu l'intérêt d'incorporer des motifs dérivés de N-alkylacrylamides grasses dans des copolymères capables d'influer sur la viscosité de milieux aqueux, aucun des copolymères décrits n'est utilisable industriellement pour la dispersion de pigments, en particulier de pigments hydrophobes. Ceci est probablement dû à une sélection inappropriée des paramètres principaux des copolymères, notamment le choix de poids moléculaires très élevés et - pour certains d'entre eux - la présence de troisième monomère tel que (méth)acrylate d'alkyle.

C'est donc un premier but de la présente invention que de définir des copolymères (méth)acryliques aisés à produire industriellement et directement utilisables comme dispersants de pigments. Un second but de la présente invention est de proposer des dispersions aqueuses de pigments, en particulier de pigments hydrophobes, qui présentent (dans les gradients de cisaillement courants, soit de 1 à 500 s⁻¹) des viscosités faibles, par exemple d'environ 0,01 à 5 Pa.s, même à de faibles taux d'utilisation du copolymère (méth)acrylique.

De manière surprenante, on a trouvé que ces objectifs pouvaient être atteints moyennant une sélection appropriée des monomères et de leurs proportions respectives dans le copolymère (méth)acrylique ainsi que du poids moléculaire du copolymère lui-même.

Un premier objet de la présente invention concerne donc une famille de copolymères (méth)acryliques de formule générale 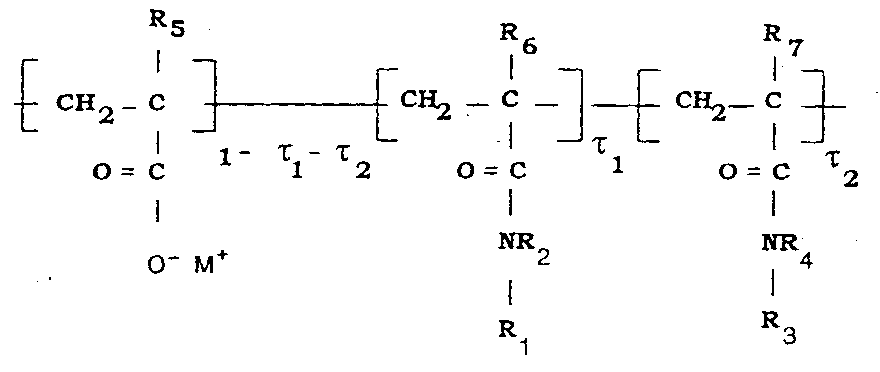 dans laquelle :
- les M⁺ sont des cations monovalents provenant de la neutralisation des groupes -COOH, cette neutralisation pouvant cependant n'avoir été que partielle ;
- R₁ et R₂ sont choisis parmi : l'hydrogène, les radicaux alkyles ou cycloalkyles linéaires ou ramifiés à chaîne longue, comportant de 8 à 30 atomes de carbone, et les radicaux aryles ayant de 8 à 22 atomes de carbone, avec la condition que l'un au moins de R₁ et R₂ n'est pas l'hydrogène ;
- R₃ et R₄ sont choisis indépendamment parmi : l'atome d'hydrogène, les radicaux alkyles ou cycloalkyles à chaîne courte ayant de 1 à 7 atomes de carbone et les radicaux aryles ayant de 6 à 7 atomes de carbone ;
- R₅, R₆ et R₇ sont chacun, indépendamment l'un de l'autre, choisis parmi l'atome d'hydrogène et le radical méthyle ;
- τ₁ est le taux molaire de motifs amides à chaîne longue dans le copolymère ; et
- τ₂ est le taux molaire de motifs amides à chaîne courte éventuellement présents dans le copolymère, et
caractérisés en ce que leur masse molaire moyenne en poids ne dépasse pas 30.000 et en ce que τ₁ est compris entre 0,01 et 0,30.

Selon des modes de réalisation préférentiels de la présente invention, ces copolymères :
- ont une masse molaire moyenne en poids au moins égale à 2000, et/ou
- présentent un taux molaire τ₁ compris entre 0,02 et 0,12, et/ou
- présentent un taux molaire τ₂ allant de 0 à 0,4, et/ou
- comprennent des motifs amides dans lesquels l'un au moins de R₁ et R₂ est un radical alkyle linéaire ou ramifié ayant de 10 à 18 atomes de carbone.

Le cation monovalent M⁺ est de préférence majoritairement un cation d'un métal alcalin tel que le sodium ou le potassium, l'ion ammonium, un ion ammonium quaternisé ou bien un complexe de zinc. Il peut aussi être, de préférence minoritairement, le proton. Des mélanges de cations monovalents tels que définis ci-dessus entrent aussi dans le champ de la présente invention.

Pour les besoins de la présente invention, une première méthode d'estimation de la masse molaire moyenne en poids consiste à estérifier le copolymère (méth)acrylique puis à soumettre l'échantillon de copolymére estérifié à la chromatographie par perméation de gel dans le tétrahydrofuranne, en utilisant un échantillon de polystyrène pour l'étalonnage. Une seconde méthode d'estimation de la masse molaire moyenne en poids consiste en l'emploi de la chromatographie d'exclusion stérique en phase aqueuse en utilisant comme phase mobile une solution aqueuse de nitrate de lithium, en utilisant une colonne à base de silice greffée et en utilisant comme polymères étalons par exemple des polyacrylates de sodium ou des polyoxyéthylènes.

Un second objet de la présente invention concerne la fabrication des copolymères (méth)acryliques décrits précédemment, pour laquelle deux méthodes sont proposées. Une première méthode de synthèse consiste dans la copolymérisation directe, par voie radicalaire d'un mélange de monomères comprenant : un acide (méth)acrylique, un dérivé N-substitué de (méth)acrylamide de formule 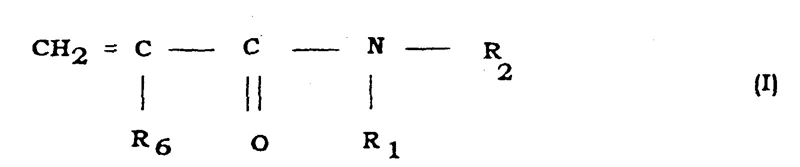 dans laquelle R₁, R₂ et R₆ ont les significations indiquées ci-dessus et le cas échéant un dérivé N- substitué de (méth)acrylamide de formule 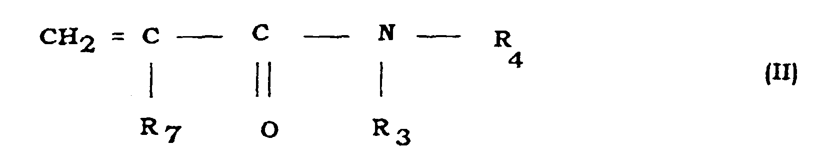 dans laquelle R₃, R₄ et R₇ ont les significations indiquées ci-dessus, la copolymérisation étant effectuée dans au moins un solvant organique capable de permettre une réaction de transfert suffisante pour que la masse molaire moyenne en poids du copolymère ne dépasse pas 30.000 et en présence d'au moins un amorceur de radicaux libres, à une température au plus égale à la température d'ébullition du solvant et au moins égale à la température de décomposition de l'amorceur et pendant une durée de 0,5 à 12 heures, suffisante pour convertir la totalité des monomères présents (acide (méth)acrylique et dérivé(s) N-substitué(s) de (méth)acrylamide), la copolymérisation étant suivie de la neutralisation du copolymère formé. La température de copolymérisation est le plus souvent comprise entre 40°C et 100°C. La neutralisation peut s'effectuer au moyen d'une base concentrée telle que l'ammoniaque, la soude, la potasse ou de préférence les alcoxydes alcalins (alcoolates de sodium ou potassium), ces derniers pouvant être utilisés en solution alcoolique. Selon cette première méthode de synthèse, étant donné que la durée de copolymérisation est ajustée pour obtenir une conversion totale, on met en oeuvre pour 1 mole de mélange de monomères τ₁ mole du dérivé N- substitué de formule (I) et, le cas échéant, τ₂ mole du dérivé N-substitué de formule (II) pour 1-(τ₁ + τ₂) mole d'acide (méth)acrylique. L'homme du métier sait choisir, par quelques essais de routine, la durée de copolymérisation appropriée à une conversion totale des monomères en fonction des autres paramètres variables que sont l'amorceur de radicaux libres, la nature des radicaux R₁, R₂ et R₆ et, le cas échéant, la nature des radicaux R₃, R₄ et R₇ et enfin les valeurs de τ₁ et τ₂. Selon cette première méthode de synthèse, on utilise de préférence comme solvant organique un alcool léger tel que l'isopropanol ou bien un ester saturé tel que l'acétate d'éthyle. Comme amorceurs de radicaux libres on peut citer entre autres des composés diazoïques, des peroxydes organiques, peroxydicarbonates et peroxyesters tels que le peroxyde de benzoyle, l'hydroperoxyde de butyle tertiaire, le peroxyde de butyle tertiaire, le peroxyde de dicumyle, le 2,2 bis (ter-butylperoxy) butane, le peracétal, le 1,1-bis (t-butylperoxy) 3,3,5-triméthylcyclohexane, le perbenzoate de butyle tertiaire, le peroxyoctoate de butyle tertiaire, le ter-butyl peroxy isopropylcarbonate, le perisononanoate de butyle tertiaire, le permaléate de butyle tertiaire, le peracétal cyclique, le 2,5-diméthyl-2,5-bis (2-éthylhexylperoxy) hexane, le peroxyde de méthyléthylcétone, le peroxyoctoate de tertioamyle, les 2,5-diperoxyoctoates, ou encore le peroxyde de 2,4-pentanedione. L'amorceur de radicaux libres sera choisi de telle sorte que sa température de décomposition ne dépasse pas la température d'ébullition du solvant organique sous la pression considérée. Le cas échéant la copolymérisation peut être effectuée en présence en outre d'au moins un agent de transfert en une proportion allant jusqu'à 1 % en poids par rapport aux monomères.

Selon cette première méthode de synthèse, les radicaux R₅, R₆ et R₇ peuvent être choisis de manière totalement indépendante les uns des autres et il est possible, par exemple, de combiner dans le copolymère des motifs dérivés d'un acrylate de cation monovalent avec des motifs provenant de dérivés N- substitués de méthacrylamides ou bien inversement de combiner dans le copolymère des motifs dérivés d'un méthacrylate de cation monovalent avec des motifs provenant de dérivés N- substitués d'acrylamides.

Une seconde méthode de synthèse des copolymères acryliques décrits précédemment consiste à faire réagir un acide poly(méth)acrylique, de masse molaire moyenne en poids telle qu'elle ne dépasse pas 30.000 après réaction, dans un solvant dudit acide poly(méth)acrylique et une amine primaire ou secondaire de formule R₁R₂NH et le cas échéant une seconde amine primaire ou secondaire de formule R₃R₄NH en présence d'un carbodiimide telle que le dicyclohexylcarbodiimide. Cette méthode produit de manière quantitative, après saponification du produit de cette réaction, le copolymère acrylique décrit précédemment ainsi qu'une diurée telle que la dicyclohexylurée. Celle-ci se présentant dans le milieu sous la forme de précipité est facilement éliminée de la solution organique par filtration. Selon cette seconde méthode, la réaction est conduite à une température ne dépassant pas le point d'ébullition du solvant choisi, de préférence comprise entre 20 et 80°C. La réaction est de préférence effectuée pendant une durée de 30 minutes à 12 heures et la neutralisation consécutive est de préférence effectuée au moyen d'une base concentrée, par exemple une solution alcoolique d'alcoxyde alcalin tel que le méthoxylate ou l'éthoxylate de sodium ou de potassium ou une solution aqueuse et concentrée d'un hydroxyde alcalin tel que la soude ou la potasse. Selon cette seconde méthode de synthèse R₅, R₆ et R₇ sont nécessairement identiques et sont soit l'atome d'hydrogène (modification d'acide polyacrylique) soit le radical méthyle (modification d'acide polyméthacrylique). Comme exemples de solvants organiques convenant à cette seconde méthode de synthèse on peut citer la N-méthylpyrrolidone, la diméthylformamide. La réaction effectuée selon cette méthode étant quantitative, on mettra de préférence en oeuvre τ₁ mole d'amine R₁R₂NH et le cas échéant τ₂ mole d'amine R₃R₄NH pour chaque mole d'acide poly(méth)acrylique engagé.

Pour la fabrication des copolyméres (méth)acryliques selon l'invention on choisira la première ou la seconde méthode de synthèse en fonction d'une part de la disponibilité commerciale du dérivé N- substitué de formule (I) et d'autre part du besoin éventuel de différencier R₅, R₆ et R₇.

Un troisième objet de la présente invention concerne l'utilisation des copolymères (méth)acryliques décrits précédemment comme dispersants de pigments divers et plus particulièrement comme dispersants de pigments hydrophobes comme le noir de carbone. D'autres pigments auxquels les copolymères selon l'invention peuvent être appliqués utilement comme dispersants comprennent d'une part des pigments minéraux tels que le dioxyde de titane et les oxydes de fer jaune et rouge et d'autre part des pigments organiques tels que le bleu de phtalocyanine de cuivre, les rouges de β-naphtol, les jaunes azoiques d'acétarylides, le violet de dioxazine et le vert de phtalocyanine. Selon la présente invention, le copolymère (méth)acrylique est ajouté à un milieu majoritairement aqueux contenant ledit pigment. Par milieu majoritairement aqueux on entend une dispersion du pigment organique ou minéral, hydrophobe ou non, dans l'eau ou dans un mélange, majoritaire en poids en eau, d'eau et d'au moins un composé miscible avec l'eau tel qu'un glycol. La concentration de pigment dans cette dispersion peut être très variable selon la nature du pigment et atteindre jusqu'à 70 % en poids pour un pigment minéral comme le dioxyde de titane. Des concentrations usuelles pour le noir de carbone et le bleu de phtalocyanine de cuivre varient de 10 % à 50 % en poids. Selon la nature du pigment, le copolymère (méth)acrylique selon l'invention est utilisé en proportion plus ou moins importante. Par exemple on préfère utiliser de 1 à 10 % en poids de copolymère par rapport au poids de pigment lorsque celui-ci est minéral, mais plutôt de 1 à 30 % en poids de copolymère par rapport au poids de pigment lorsque celui-ci est organique, ces proportions étant calculées en poids de matière sèche c'est-à-dire en faisant abstraction du poids du milieu aqueux ou majoritairement aqueux.

Ainsi les copolymères (méth)acryliques selon l'invention trouvent une utilisation particulièrement appréciée dans tous les domaines où intervient l'emploi d'une pâte pigmentaire aqueuse et notamment dans les domaines des encres, des peintures et revêtements et de la fabrication des matières plastiques colorées lorsque le procédé de fabrication inclut une étape en phase aqueuse. L'utilisation des copolymères (méth)acryliques selon l'invention comme dispersants de pigments est plus particulièrement avantageuse dans le cas des peintures en phase aqueuse, ainsi que des peintures en phase solvant notamment celles utilisant comme liant polymère une résine alkyde à huile longue, à huile moyenne ou à huile courte, une résine alkyde modifiée par une résine uréthane, une résine époxy ou une résine acrylique, un copolymère de chlorure de vinyle ou une résine alkyde hydrodiluable. Cette utilisation sera également appréciée dans le cas de la fabrication de pigments enrobés, pigments destinés à être dispersés directement dans une formulation aqueuse. Dans toutes ces utilisations les copolyméres (méth)acryliques selon l'invention procurent des avantages sensibles par rapport aux autres polymères dispersants déjà connus, notamment en termes de comportement rhéologique, de pouvoir dispersant, de force colorante, de stabilité sur longue durée et de compatibilité avec le pigment et avec les autres ingrédients de la formulation finale à laquelle la pâte pigmentaire aqueuse est intégrée, que celle-ci soit une formulation d'encre, de peinture ou revêtement ou encore de matière plastique. En particulier les dispersions pigmentaires préparées à partir des copolymères selon l'invention sont très peu visqueuses à température ambiante même avec un faible taux de dispersant.

Les exemples ci-après sont fournis à titre illustratif et non limitatif de la présente invention.

### EXEMPLE 1

Une solution aqueuse fournie par la société COATEX, d'une mole d'un polyacrylate de sodium de masse molaire moyenne en poids égale à 4 000 est passée sur une colonne échangeuse d'ions dont la résine a été acidifiée au préalable par l'acide chlorhydrique et rincée pour éliminer toute trace de sel. Les fractions récupérées sont concentrées puis lyophilisées. L'acide polyacrylique ainsi obtenu est mis en solution dans 500 ml de N-méthyl pyrrolidone. Une solution de 0,05 mole d'amine grasse (dodécylamine) est ajoutée goutte à goutte à la température de 60°C. On porte ensuite la température à 80°C. Une solution de 0,055 mole de dicyclohexyl-carbodiimide dans 80 ml de N-méthyl pyrrolidone est versée goutte à goutte sous agitation vigoureuse. Le milieu est alors agité pendant 1 heure à 80°C puis laissé sous agitation jusqu'à ce que la température atteigne 20°C. La solution est ensuite filtrée pour éliminer le précipité de dicyclohexylurée. On ajoute alors 2 équivalents (calculés par rapport aux groupes carboxyliques) de méthanolate de sodium en solution à 33 % dans le méthanol à froid et sous agitation vigoureuse, le copolymère acrylique selon l'invention précipité, est récupéré, séché, remis en solution dans l'eau, précipité dans le méthanol, séché, remis en solution dans l'eau et lyophilisé. Le rendement de cette synthèse est égal à 65 %.

L'analyse spectroscopique par résonance magnétique nucléaire du proton du copolymère acrylique ainsi obtenu permet de vérifier la formule générale : 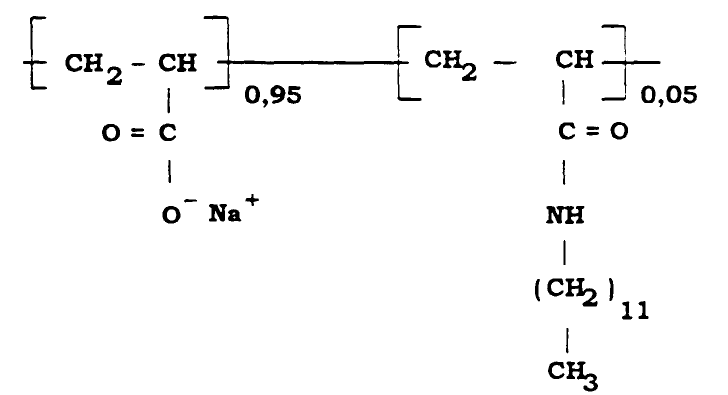 La masse molaire moyenne en poids de ce copolymère est égale à 4.300.

### EXEMPLE 2

On prépare une dispersion comprenant, en poids, 67 % d'eau, 30 % de noir de carbone et 3 % du copolymère acrylique de l'exemple 1. La rhéologie de cette dispersion est étudiée au moyen d'un rhéomètre Carrimed de type C.S. En particulier on mesure la viscosité η, exprimée en Pa.s, de la dispersion à différents gradients de cisaillement γ (exprimés en s⁻¹). Les résultats de ces mesures figurent dans le tableau I ci-après.

### EXEMPLE 3 (COMPARATIF)

On prépare une dispersion de noir de carbone comme à l'exemple 2 mais en utilisant comme dispersant un produit commercialisé sous la dénomination JONCRYL 678. Les résultats des mesures de viscosité sur cette dispersion sont indiqués dans le tableau I ci-après.

### EXEMPLE 4

On reproduit la synthèse de l'exemple 1 aux deux exceptions suivantes près :
- le polyacrylate de sodium de départ fourni par la société FLUKA a une masse molaire moyenne en poids égale à 5.100.
- la stéarylamine est utilisée comme amine grasse aux lieu et place de la dodécylamine.
On obtient avec un rendement de 65 % un copolymère de masse molaire moyenne en poids égale à 5.700.

### EXEMPLE 5

On prépare une dispersion de noir de carbone comme à l'exemple 2 mais en utilisant comme dispersant le copolymére de l'exemple 4. Les résultats des mesures de viscosité sur cette dispersion sont indiqués dans le tableau I ci-après.

### EXEMPLE 6

On prépare une dispersion comprenant, en poids, 58 % d'eau, 40 % de noir de carbone et 2 % du copolymère acrylique de l'exemple 4. Les résultats des mesures de viscosité sur cette dispersion sont indiqués dans le tableau I ci-après.

### EXEMPLE 7

On reproduit la synthèse de l'exemple 1 aux deux exceptions suivantes prés :
- le polyacrylate de sodium de départ a une masse molaire moyenne en poids égale à 5.100.
- la quantité de dodécylamine mise en jeu est doublée et portée à 0,10 mole.
On obtient avec un rendement de 65 % un copolymère comprenant 90 % de motifs dérivés de l'acrylate de sodium et 10 % de motifs dérivés de l'acrylamide grasse, dont la masse molaire moyenne en poids est égale à 5.900.

### EXEMPLE 8

On prépare une dispersion comprenant, en poids, 59 % d'eau, 40 % de bleu de phtalocyanine commercialisé sous l'appellation LANGDOCYAL PO 361 par la société LANGUEDOCIENNE DE MICRON-COULEURS et 1 % du copolymère acrylique de l'exemple 7. Les résultats des mesures de viscosité sur cette dispersion sont indiqués dans le tableau II ci-après.

### EXEMPLE 9 (COMPARATIF)

On prépare une dispersion comprenant, en poids, 55,8 % d'eau, 40 % de bleu de phtalocyanine (référence PO 361) et 4,2 % d'un dispersant commercialisé par la société AKZO sous la référence DAPRAL GE 202. Les résultats des mesures de viscosité sur cette dispersion sont indiqués dans le tableau II ci-après. Il est important de noter que lorsque, à proportion égale (40 %) de pigment, on abaisse la proportion de dispersant jusqu'à 1 % en augmentant corrélativement la proportion d'eau jusqu'à 59 %, alors la viscosité de la dispersion est augmentée à un point tel qu'elle n'est plus mesurable.

### EXEMPLE 10

On prépare une dispersion comprenant, en poids, 29,37 % d'eau, 70 % de dioxyde de titane commercialisé sous l'appellation TR 80 par la société TIOXIDE et 0,63 % du copolymère acrylique de l'exemple 7. Les résultats des mesures de viscosité sur cette dispersion sont indiqués dans le tableau II ci-après.

### EXEMPLE 11 (COMPARATIF)

On prépare une dispersion comprenant, en poids, 28,9 % d'eau, 70 % de dioxyde de titane (référence TR 80) et 1,1 % du dispersant DAPRAL GE 202 déjà cité. Les résultats des mesures de viscosité sur cette dispersion sont indiqués dans le tableau II ci-après. Il est important de noter que lorsque, à proportion égale (70 %) de pigment, on abaisse la proportion de dispersant jusqu'à 0,63 % en augmentant corrélativement la proportion d'eau jusqu'à 29,37 %, alors la viscosité de la dispersion est augmentée a un point tel qu'elle n'est plus mesurable.

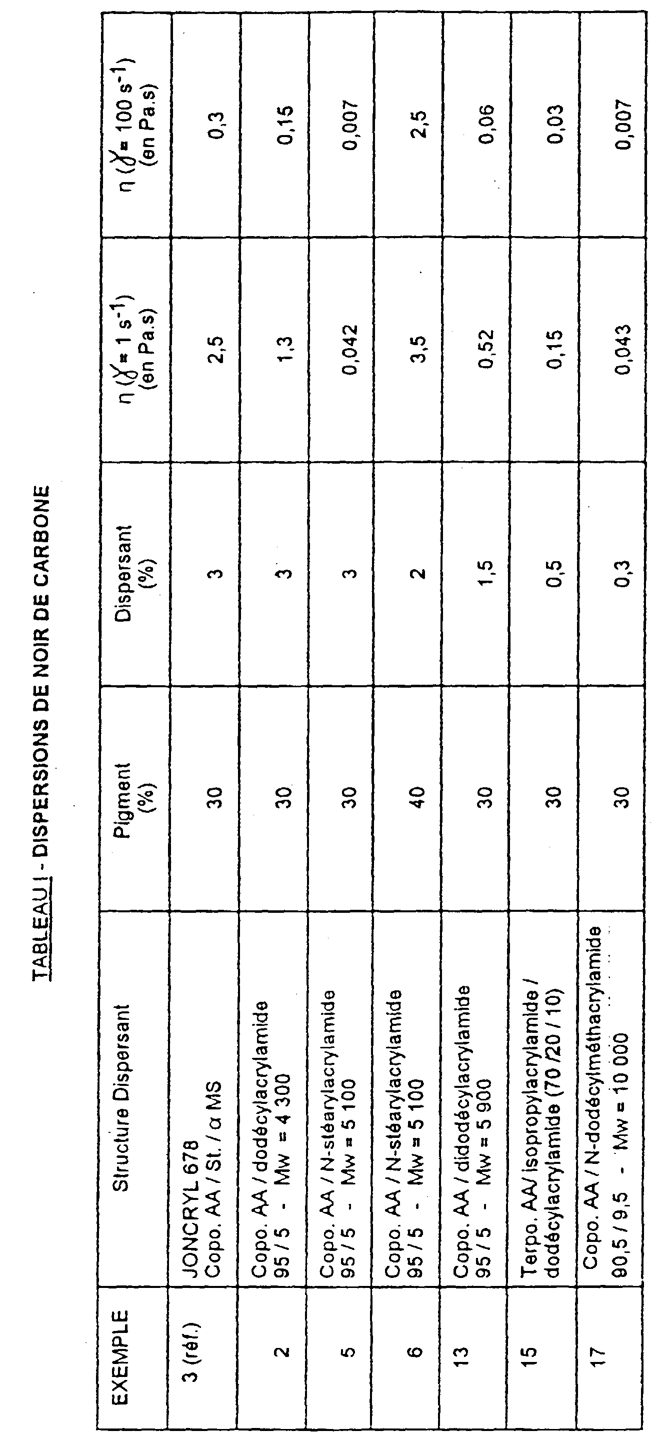

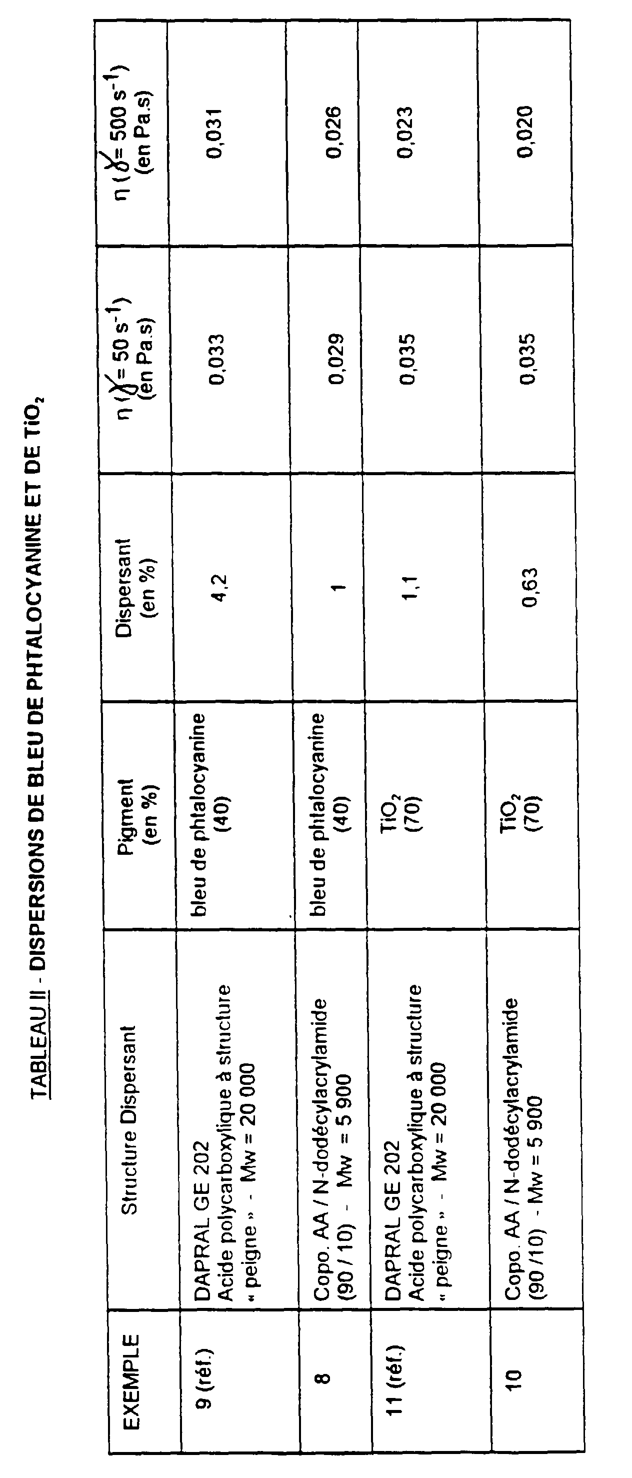

### EXEMPLE 12

On reproduit la synthèse de l'exemple 1 aux deux exceptions suivantes près :
- le polyacrylate de sodium de départ fourni par la société FLUKA a une masse molaire moyenne en poids égale à 5.100.
- la didodécylamine est utilisée comme amine grasse aux lieu et place de la dodécylamine.
On obtient alors avec un rendement de 70 % un copolymère de masse molaire moyenne en poids égale à 5.900.

### EXEMPLE 13

On prépare une dispersion comprenant. en poids. 68,5 % d'eau. 30 % de noir de carbone et 1,5 % du copolymere acrylique de l'exemple 12. Les résultats des mesures de viscosité sur cette dispersion sont indiqués dans le tableau I.

### EXEMPLE 14

On répète la synthèse de l'exemple 7 jusqu'à la filtration du mélange réactionnel pour éliminer le précipité de dicyclohexylurée. On ajoute alors goutte à goutte a la température de 0°C une solution de 0,20 mole d'isopropylamine dans 200 ml de N-méthyl pyrrolidone. On verse ensuite une solution de 0,22 mole de dicyclohexylcarbodiimide dans 150 ml de N-méthyl pyrrolidone puis on agite le milieu pendant 1 heure à la température de 0°C. Le précipité de dicyclohexylurée est alors éliminé puis le polymère formé est neutralisé et purifié comme à l'exemple 1. Le rendement de cette synthèse est égal à 30 %.

L'analyse spectroscopique par résonance magnétique nucléaire du proton confirme la formation d'un terpolymère de formule :

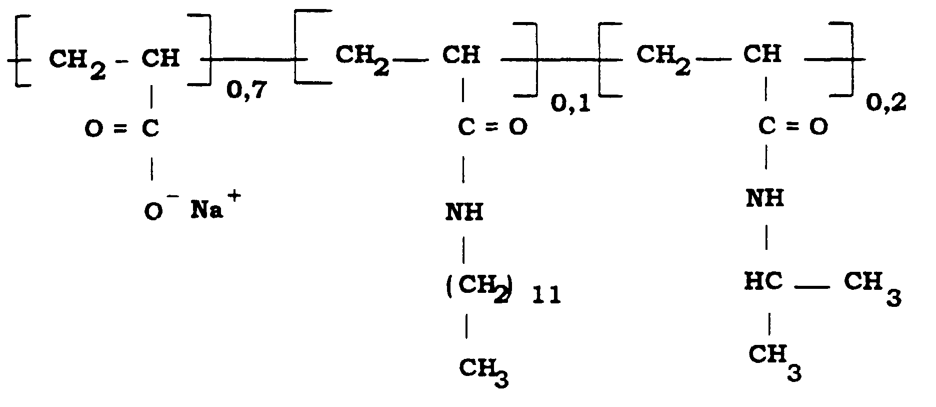

### EXEMPLE 15

On prépare une dispersion comprenant. en poids. 69,5 % d'eau. 30 % de noir de carbone et 0,5 % du terpolymère acrylique de l'exemple 14. Les résultats des mesures de viscosité sur cette dispersion sont indiqués dans le tableau I.

### EXEMPLE 16

Dans un réacteur agité muni d'un agitateur et d'un réfrigérant on introduit 10 g d'acide acrylique puis 84 ml d'une solution de 3,5 g de N-dodécylméthacrylamide dans l'isopropanol. On ajoute encore dans le réacteur une solution de 0,75 g de peroxyde de benzoyle dans 28 ml d'acétate d'éthyle. On chauffe alors le réacteur jusqu'à 83°C et on maintient à reflux pendant 3 heures. Après refroidissement. le copolymère formé est neutralisé par 54 ml d'une solution de méthanolate de sodium à 30 % dans le méthanol. Le précipité formé est filtré. rincé par de l'isopropanol. séché sous vide, mis en solution dans l'eau puis lyophilisé. Le rendement de cette synthèse est de 66 %. L'analyse spectroscopique par résonance magnétique nucléaire du proton confirme la formation d'un copolymère comprenant 90,5 % en moles de motifs dérivés de l'acrylate de sodium et 9,5 % en moles de motifs dérivés de la N-dodécylméthacrylamide. La masse molaire moyenne en poids de ce copolymère (estimée par chromatographie d'exclusion stérique en phase aqueuse en utilisant comme phase mobile une solution 0,5 molaire de nitrate de lithium, et en utilisant des colonnes SHODEX OH-PAK et comme polymères étalons du polyoxyde d'éthylène) est de 5.500.

### EXEMPLE 17

On prépare une dispersion comprenant, en poids, 69,75 % d'eau, 30 % de noir de carbone et 0,25 % du copolymére de l'exemple 16. Les résultats des mesures de viscosité de cette dispersion sont indiqués dans le tableau I.

## Revendications

1. Copolymères (méth)acryliques de formule générale 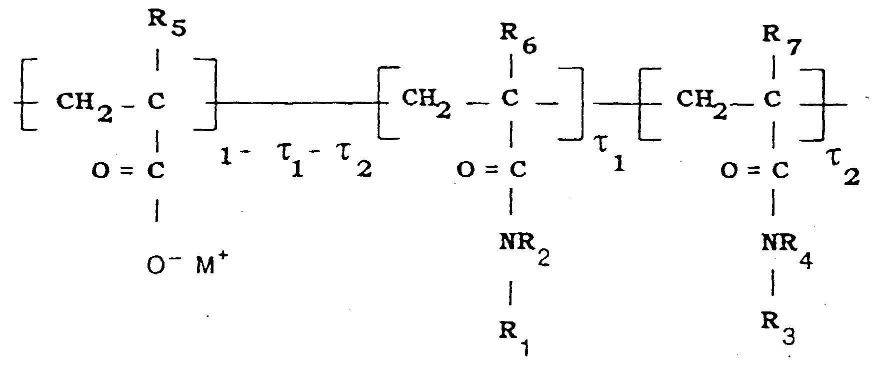 dans laquelle :
- les M⁺ sont des cations monovalents provenant de la neutralisation des groupes -COOH, cette neutralisation pouvant cependant n'avoir été que partielle ;
- R₁ et R₂ sont choisis parmi : l'hydrogène, les radicaux alkyles ou cycloalkyles linéaires ou ramifiés à chaîne longue, comportant de 8 à 30 atomes de carbone, et les radicaux aryles ayant de 8 à 22 atomes de carbone, avec la condition que l'un au moins de R₁ et R₂ n'est pas l'hydrogène;
- R₃ et R₄ sont choisis indépendamment parmi : l'atome d'hydrogène, les radicaux alkyles ou cycloalkyles à chaîne courte ayant de 1 à 7 atomes de carbone et les radicaux aryles ayant de 6 à 7 atomes de carbone ;
- R₅, R₆ et R₇ sont chacun, indépendamment l'un de l'autre, choisis parmi l'atome d'hydrogène et le radical méthyle ;
- τ₁ est le taux molaire de motifs amides à chaîne longue dans le copolymère ; et
- τ₂ est le taux molaire de motifs amides à chaîne courte éventuellement présents dans le copolymère, et
caractérisés en ce que la masse molaire moyenne en poids ne dépasse pas 30.000 et en ce que τ₁ est compris entre 0,01 et 0,30.

2. Copolymères (méth)acryliques selon la revendication 1, caractérisés en ce qu'ils ont une masse molaire moyenne en poids au moins égale à 2.000.

3. Copolymères (méth)acryliques selon l'une des revendications 1 et 2, caractérisés en ce qu'ils présentent un taux molaire τ₁ compris entre 0,02 et 0,12.

4. Copolymères (méth)acryliques selon l'une quelconque des revendications 1 à 3, caractérisés en ce qu'ils présentent un taux molaire τ₂ allant de 0 à 0,4.

5. Copolymères (méth)acryliques selon l'une des revendications 1 à 4, caractérisés en ce qu'ils comprennent des motifs amides dans lesquels l'un au moins de R₁ et R₂ est un radical alkyle linéaire ou ramifié ayant de 10 à 18 atomes de carbone.

6. Copolymères (méth)acryliques selon l'une des revendications 1 à 5, caractérisés en ce que le cation monovalent M⁺ est choisi parmi les cations de métal alcalin, l'ion ammonium, les ions ammoniums quaternisés et les complexes de zinc.

7. Procédé de fabrication de copolymères (méth)acryliques selon l'une des revendications 1 à 6 par copolymérisation directe, par voie radicalaire d'un mélange de monomères comprenant : l'acide (méth)acrylique, un dérivé N- substitué de (méth)acrylamide de formule 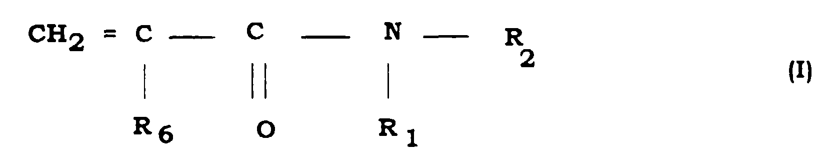 et le cas échéant un dérivé N- substitué de (méth)acrylamide de formule 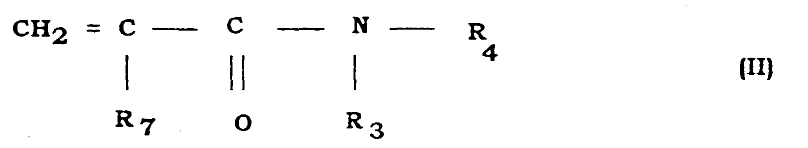 la copolymérisation étant effectuée dans un solvant organique et en présence d'au moins un amorceur de radicaux libres, à une température comprise entre la température de décomposition de l'amorceur et la température d'ébullition du solvant pendant une durée de 0,5 à 12 heures, et étant suivie de la neutralisation du copolymère formé.

8. Procédé de fabrication selon la revendication 7, caractérisé en ce que l'on met en oeuvre pour 1 mole de mélange de monomères τ₁ mole du dérivé N-substitué de formule (I) et, le cas échéant, τ₂ mole du dérivé N-substitué de formule (II) pour 1-(τ₁ + τ₂) mole d'acide (méth)acrylique.

9. Utilisation d'un copolymère (méth)acrylique selon l'une des revendications 1 à 6, ou fabriqué par un procédé selon l'une des revendications 7 et 8, comme dispersant de pigment, ledit copolymère (méth)acrylique étant ajouté à un milieu majoritairement aqueux contenant ledit pigment.

10. Utilisation selon la revendication 9, caractérisée en ce que le copolymère (méth)acrylique est utilisé en proportion de 1 à 10 % en poids de copolymère par rapport au poids de pigment lorsque celui-ci est minéral, mais de 1 à 30 % en poids de copolymère par rapport au poids de pigment lorsque celui-ci est organique.

## Claims

1. (Meth)acrylic copolymers of general formula 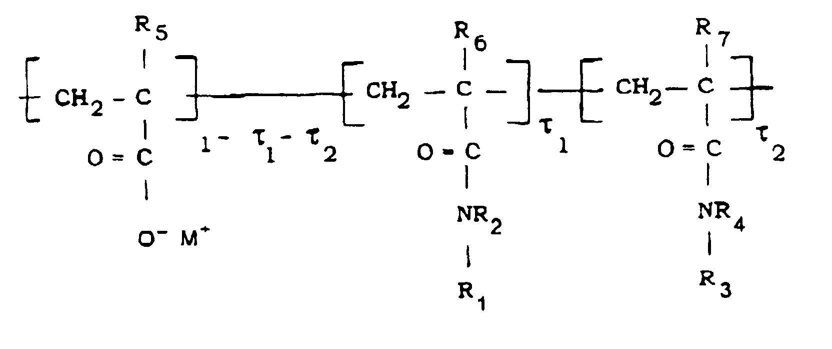 in which:
- the M⁺ are monovalent cations arising from the neutralization of the -COOH groups, it being possible, however, for this neutralization to have been only partial;
- R₁ and R₂ are chosen from: hydrogen, long-chain linear or branched cycloalkyl or alkyl radicals, containing from 8 to 30 carbon atoms, and aryl radicals having from 8 to 22 carbon atoms, with the condition that at least one of R₁ and R₂ is not hydrogen;
- R₃ and R₄ are independently chosen from: the hydrogen atom, short-chain cycloalkyl and alkyl radicals having from 1 to 7 carbon atoms and aryl radicals having from 6 to 7 carbon atoms;
- R₅, R₆ and R₇ are each, independently of one another, chosen from the hydrogen atom and the methyl radical;
- τ₁ is the molar level of long-chain amide units in the copolymer; and
- τ₂ is the molar level of short-chain amide units optionally present in the copolymer, and
characterized in that that the weight-average molar mass does not exceed 30,000 and in that τ₁ is between 0.01 and 0.30.

2. (Meth)acrylic copolymers according to Claim 1, characterized in that they have a weight-average molar mass at least equal to 2000.

3. (Meth)acrylic copolymers according to either of Claims 1 and 2, characterized in that they exhibit a molar level τ₁ of between 0.02 and 0.12.

4. (Meth)acrylic copolymers according to any one of Claims 1 to 3, characterized in that they exhibit a molar level τ₂ ranging from 0 to 0.4.

5. (Meth)acrylic copolymers according to one of Claims 1 to 4, characterized in that they comprise amide units in which at least one of R₁ and R₂ is a linear or branched alkyl radical having from 10 to 18 carbon atoms.

6. (Meth)acrylic copolymers according to one of Claims 1 to 5, characterized in that the monovalent cation M⁺ is chosen from alkali metal cations, the ammonium ion, quaternized ammonium ions and zinc complexes.

7. Process for the manufacture of (meth)acrylic copolymers according to one of Claims 1 to 6 by direct copolymerization, by the radical route, of a mixture of monomers comprising: (meth)acrylic acid, an N-substituted (meth)acrylamide derivative of formula 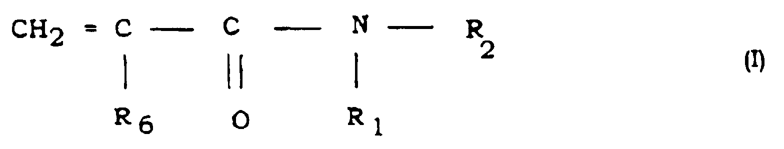 and, if appropriate, an N-substituted (meth)acrylamide derivative of formula
the copolymerization being carried out in an organic solvent and in the presence of at least one free-radical 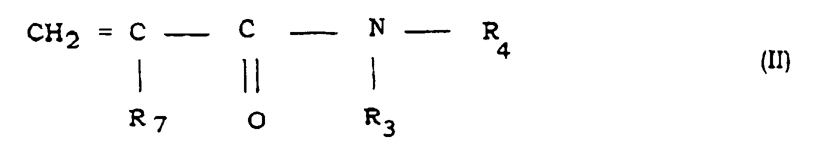 initiator, at a temperature between the decomposition temperature of the initiator and the boiling temperature of the solvent, for a time of 0.5 to 12 hours and being followed by the neutralization of the copolymer formed.

8. Manufacturing process according to Claim 7, characterized in that use is made, per 1 mol of mixture of monomers, of τ₁ mol of the N-substituted derivative of formula (I) and, if appropriate, τ₂ mol of the N-substituted derivative of formula (II) per 1-(τ₁ + τ₂) mol of (meth)acrylic acid.

9. Use of a (meth)acrylic copolymer according to one of Claims 1 to 6, or manufactured by a process according to either of Claims 7 and 8, as pigment dispersant, the said (meth)acrylic copolymer being added to a largely aqueous medium containing the said pigment.

10. Use according to Claim 9, characterized in that the (meth)acrylic copolymer is used in the proportion of 1 to 10 weight % of copolymer with respect to the weight of pigment when the latter is inorganic but of 1 to 30 weight % of copolymer with respect to the weight of pigment when the latter is organic.

## Patentansprüche

1. (Meth)acrylcopolymere der allgemeinen Formel 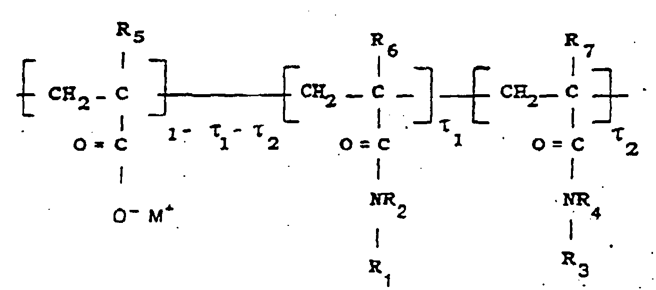 worin:
- M⁺ einwertige, durch Neutralisation der -COOH-Gruppen entstandene Kationen bedeuten, wobei diese Neutralisation auch nur teilweise stattgefunden haben kann;
- R₁ und R₂ ausgewählt sind aus: Wasserstoff, linearen oder verzweigten langkettigen Alkyl- oder Cycloalkylresten mit 8 bis 30 Kohlenstoffatomen und Arylresten mit 8 bis 22 Kohlenstoffatomen, unter der Bedingung, daß mindestens einer der Reste R₁ und R₂ nicht Wasserstoff bedeutet;
- R₃ und R₄ unabhängig voneinander ausgewählt sind aus: Wasserstoffatom, kurzkettigen Alkyl- oder Cycloalkylresten mit 1 bis 7 Kohlenstoffatomen und Arylresten mit 6 bis 7 Kohlenstoffatomen;
- R₅, R₆ und R₇ jeweils unabhängig voneinander ausgewählt sind aus: Wasserstoffatom und Methylrest;
- τ₁ das Molverhältnis von langkettigen Amideinheiten im Copolymer; und
- τ₂ das Molverhältnis von im Copolymer gegebenenfalls vorliegenden kurzkettigen Amideinheiten bedeuten;
dadurch gekennzeichnet, daß die gewichtsmittlere Molmasse 30.000 nicht überschreitet und daß τ₁ zwischen 0,01 und 0,30 liegt.

2. (Meth)acrylcopolymere nach Anspruch 1, dadurch gekennzeichnet, daß sie eine gewichtsmittlere Molmasse von mindestens 2000 aufweisen.

3. (Meth)acrylcopolymere nach Anspruch 1 oder 2, dadurch gekennzeichnet, daß sie ein Molverhältnis τ₁ zwischen 0,02 und 0,12 aufweisen.

4. (Meth)acrylcopolymere nach einem der Ansprüche 1 bis 3, dadurch gekennzeichnet, daß sie ein Molverhältnis τ₂ von 0 bis 0,4 aufweisen.

5. (Meth)acrylcopolymere nach einem der Ansprüche 1 bis 4, dadurch gekennzeichnet, daß sie Amideinheiten aufweisen, in denen mindestens einer der Reste R₁ und R₂ einen linearen oder verzweigten Alkylrest mit 10 bis 18 Kohlenstoffatomen bedeutet.

6. (Meth)acrylcopolymere nach einem der Ansprüche 1 bis 5, dadurch gekennzeichnet, daß das einwertige Kation M⁺ ausgewählt ist aus Alkalikationen, dem Ammoniumion, quaternisierten Ammoniumionen und Zinkkomplexen.

7. Verfahren zur Herstellung von (Meth)acrylcopolymeren nach einem der Ansprüche 1 bis 6 durch direkte Copolymerisation auf radikalischem Weg einer Monomermischung aus (Meth)acrylsäure, einem N-substituierten Derivat des (Meth)acrylamids der Formel 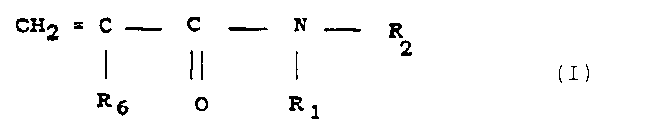 und gegebenenfalls einem N-substituierten Derivat des (Meth)acrylamids der Formel 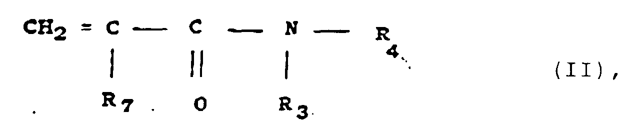 wobei die Copolymerisation in einem organischen Lösungsmittel und in Gegenwart mindestens eines Radikalbildners bei einer Temperatur zwischen der Zersetzungstemperatur des Radikalbildners und der Siedetemperatur des Lösungsmittels über einen Zeitraum von 0,5 bis 12 Stunden mit anschließender Neutralisation des gebildeten Copolymers erfolgt.

8. Herstellungsverfahren nach Anspruch 7, dadurch gekennzeichnet, daß man pro Mol Monomergemisch τ₁ mol des N-substituierten Derivats der Formel (I) und gegebenenfalls τ₂ mol des N-substituierten Derivats der Formel (II) pro 1-(τ₁ + τ₂) mol (Meth)acrylsäure einsetzt.

9. Verwendung eines (Meth)acrylcopolymers nach einem der Ansprüche 1 bis 6 oder hergestellt nach einem Verfahren nach Anspruch 7 oder 8 als Pigmentdispergiermittel, wobei das (Meth)acrylcopolymer zu einem das Pigment enthaltenden, weitgehend wäßrigen Medium gegeben wird.

10. Verwendung nach Anspruch 9, dadurch gekennzeichnet, daß das (Meth)acrylcopolymer bei Vorliegen eines anorganischen Pigments in einem Anteil von 1 bis 10 Gew.-%, bezogen auf das Pigmentgewicht, bei Vorliegen eines organischen Pigments jedoch von 1 bis 30 Gew.-%, bezogen auf das Pigmentgewicht, eingesetzt wird.
